Europäisches Patentamt

European Patent Office

Office européen des brevets

(19)

(11) Veröffentlichungsnummer: **0 263 918**
B1

(12) # EUROPÄISCHE PATENTSCHRIFT

(45) Veröffentlichungstag der Patentschrift:
16.08.90

(51) Int. Cl.⁵: **C23F 11/00**, C04B 41/65,
E04G 23/04

(21) Anmeldenummer: 87108340.8

(22) Anmeldetag: **10.06.87**

(54) **Verfahren zur Instandsetzung der oberflächennahen Schichten von mit Baustahl armierten Bauwerken.**

(30) Priorität: 16.10.86 DE 3635252

(43) Veröffentlichungstag der Anmeldung:
20.04.88 Patentblatt 88/16

(45) Bekanntmachung des Hinweises auf die Patenterteilung:
16.08.90 Patentblatt 90/33

(84) Benannte Vertragsstaaten:
AT BE CH DE ES FR GB IT LI LU NL SE

(56) Entgegenhaltungen:
Chemical Abstracts, Band 99, Nr. 20, 14 November 1983,
Columbus, Ohio, USA Sekisui Chemical Co. "Repair of
cement structures". Seite 287, Spalte 2,
Zusammenfassung Nr. 163 167t
Chemical Abstracts, Band 88, Nr. 24, 12. Juni 1978,
Columbus, Ohio, USA Matsushita Electric Works, Ltd. "
Efflorescence-resistant cement tiles" Seite 372,
Spalte 1, Zusammenfassung Nr. 176 225h

(73) Patentinhaber: Jaklin, Hans, Aacher Weg 15 Erlenhof,
D-5500 Trier(DE)

(72) Erfinder: Jaklin, Hans, Aacher Weg 15 Erlenhof,
D-5500 Trier(DE)

(74) Vertreter: Eggert, Hans-Gunther, Dr.,
Räderscheidtstrasse 1, D-5000 Köln 41(DE)

EP 0 263 918 B1

**Beschreibung**

In Konstruktionen aus Stahlbeton hat der Beton zwei Funktionen zu erfüllen. Er muß die Druckspannungen aufnehmen und den Stahl vor Korrosion schützen. Der Armierungsstahl hat die Aufgabe, die Schub- und Zugspannung aufzunehmen.

Die Schutzwirkung des Zementsteins für das Eisen und ihre Dauer sind von mehreren Faktoren abhängig. Einerseits sind es die Klima- und Umweltbedingungen und andererseits ist es die Betonqualität, die primär durch die Zementanteile, die Körnung der Betonzuschläge, den Wasser-Zement-Faktor und die Betonverdichtung bestimmt wird.

Die Schutzwirkung des Betons für das Eisen ist durch die hohe Alkalität des durch Hydrolyse entstandenen $Ca(OH)_2$-pH ca. 13 - bedingt. Die Kohlensäure, die sich aus dem Kohlendioxid der Luft mit Wasser bildet, reagiert mit den Calciumionen der Calciumsilikathydrat- oder Calciumaluminathydratphasen des Zementsteins unter Bildung von Calciumcarbonat. Der Beton carbonatisiert, wie dieser Vorgang allgemein genannt wird, bei einer Betonfeuchte, die sich bei einer relativen Luftfeuchte von unter etwa 60 % einstellt. Sind die Betonporen praktisch vollständig mit Wasser gefüllt, kommt die Carbonatisierung zum Stillstand. Wie schnell und wie tief die Carbonatisierung im Beton vordringt, hängt von der Betonfeuchte und seinem Gefüge ab. Bei vollständiger Carbonatisierung fällt der pH-Wert des Betons auf ca. 8 ab. Die Eisenkorrosion braucht trotzdem nicht einzu setzen, wenn wie in Innenräumen der Beton trocken ist. Betonfeuchten, die sich bei relativen Luftfeuchten von 80 - 100 % einstellen, führen zur Rostbildung am Armierungseisen, sobald der pH-Wert der umgebenden Porenflüssigkeit unter 9,5 fällt. Die Korrosion wird durch Salze (Streu- und Tausalze), die mit dem Wasser eindringen, erheblich verstärkt. Insbesondere kommt es durch Chloridionen zu dem befürchteten Lochfraß am Eisen, der die Tragfähigkeit der Konstruktion herabsetzt. Aber auch die ganzflächige Rostung des Eisens, die anfänglich nur zu einem unbedeutenden Festigkeitsverlust des Bauteils führt, verursacht schon große Folgeschäden. Die Aufnahme von Sauerstoff und Hydratwasser erhöht das Gewicht des Korrosionsprodukts, $Fe_2O_3 \times H_2O$, bezogen auf den korrodierten Eisenanteil je nach der Menge des aufgenommenen Hydratwassers. In Abhängigkeit von der Menge des aufgenommenen Hydratwassers und der eingelagerten Salze können die Korrosionsprodukte des Stahls das vier- bis achtfache des ursprünglichen Volumens einnehmen. Durch die Volumenvermehrung platzen zunächst die Oberflächenschichten ab. Später bilden sich Risse aus, die das ganze Bauwerk durchziehen. Zur Instandsetzung von auf diese Weise geschädigtem Stahlbeton ist ein ganzes System von Maßnahmen nötig, das auf die Eigenschaften des korrodierten Stahls und des carbonatisierten Betons zugeschnitten sein muß. Eine dauerhafte Sanierung des Bauwerks kann nur erreicht werden, wenn es gelingt

1. die weitere Stahlkorrosion zu unterbinden,
2. erneut einen festen Verbund zwischen dem Stahl und dem Beton herzustellen,
3. die Fehlstellen mit einem am alten Beton und dem Eisen festhaftenden Reparaturmörtel zu füllen und anschließend
4. die gesamte Außenfläche des Bauwerks gegen das Eindringen von Feuchtigkeit abzudichten.

Wenn man die Nebenarbeiten unberücksichtigt läßt, kann der Reparaturprozeß vereinfacht in zwei Phasen eingeteilt werden. Die erste betrifft das Stoppen der Stahlkorrosion und die zweite das Füllen der Löcher und Spalten in der Betonfläche. Die bekannten Reparaturverfahren benötigen acht Stufen, die teilweise sehr arbeitsaufwendig sind: Nachdem der Bewehrungsstahl freigelegt ist, muß der Stahl bis zum Metallglanz sandgestrahlt werden. Als dritte Maßnahme wird auf dem Stahl ein Schutzanstrich aufgebracht, der mit Sand als Haftbrücke für den Reparaturmörtel bestreut wird, bevor der Schutzanstrich getrocknet ist. Im vierten Arbeitsgang werden mit einem Sand-Polymer-Zement-Wasser-Gemisch die Höhlen in der Betonfläche bestrichen, damit die Füllmischung, bestehend aus einem Kunststoff-Zement-Mörtel gut am alten Beton haftet. Die weiteren Maßnahmen betreffen die abschließende Behandlung der Betonoberfläche, Vergleichmäßigung der Betonoberfläche, Grundierung derselben mit einem Anstrich und Auftrag einer Schutzschicht, die die Carbonatisierung der oberen Betonschichten verhindert. (Paint & Resin, Okt. 1984, S. 33-37)

Die vollständige Entrostung durch Sandstrahlen ist allseitig nur möglich, wenn der Baustahl weit genug freigelegt wird, insbesondere muß der Freiraum zwischen der Stahlrückseite und dem Beton groß genug sein, damit die Strahldüse zur Entrostung eingeführt werden kann.

Die DE-OS 35 13 566 beschreibt ein Verfahren zur Hemmung der Korrosion an Stahlmaterial, das in anorganische Baumaterialien eingebaut ist, bei dem die Oberfläche von eisenbewehrtem Beton oberflächlich nacheinander mit einer wässrigen Lösung eines anorganischen Salzes, welches eine korrosionshemmende Wirkung auf das Stahlmaterial hat, und mit einer wässrigen Lösung eines wasserlöslichen Silikats imprägniert wird. Als korrosionsschutzhemmende Salze werden insbesondere Nitrite eingesetzt. In der Druckschrift wird festgestellt, daß Alkalisilikate allein keinen ausreichenden Korrosionsschutz ergeben.

Die in der Literatur beschriebenen Reparaturmörtel enthalten neben Zement, Sand und Wasser Kunstharzdispersionen. Auf 1 Raumteil (lose Schüttung) Zement werden 0,1 bis 1,0 Raumteile Kunstharzdispersion verwendet. Das sind, bezogen auf Zement, rund 8 bis 48 Gew.% Kunstharzdispersion. Erschwert

2

wird die Verarbeitung von kunstharzvergütetem Zementmörtel, (KVZ-Mörtel) dadurch, daß er innerhalb 30 bis 45 Minuten verarbeitet sein muß, weil es sonst zu Abbindestörungen kommt. Ferner behindern Witterungsverhältnisse bzw. der Feuchtegrad des Betonuntergrundes die Reparaturarbeiten. Bei Temperaturen unter 5 bis 8° C, bei Regen und feuchtkalter Witterung und nassem Untergrund ist eine Verarbeitung dieser Mörtelgruppe ausgeschlossen.

Während Zement hydraulisch erhärtet, also zum Abbinden Wasser benötigt, wird im Gegensatz hierzu der Kunstharzanteil des Mörtels nach der Wasserverdunstung fest. Deshalb muß ein Nachnässen der Repara turschicht unterbleiben, was aber bei niedrigen relativen Luftfeuchten für die Zementkomponente nachteilig ist. Der gegensätzliche chemische und physikalische Charakter von Zement und Kunstharzdispersionen bzw. von erhärtetem Beton und Kunstharz macht die Verwendung von KVZ-Mörtel problematisch, insbesondere je höher der Kunstharzanteil ist.

In feuchten Jahren hat sich noch ein weiterer Nachteil der Mauerverputze mit KVZ-Mörtel gezeigt, die "Vergrünung" der Fassaden durch Algen. Kunstharzhaltige Bauteile sind bei ausreichender Feuchte ein guter Nährboden für Parasiten und andere niedrig organisierte Lebensformen.

Die Zweikomponenten-Kunstharzmörtel auf der Basis von Epoxidharzen oder Polyurethan brauchen hier als gattungsfremd nicht behandelt zu werden, obwohl auch sie unter bestimmten Voraussetzungen zum Ausbessern von Betonoberflächen geeignet sind.

Der hohe Aufwand einschließlich der Nebenarbeiten für die Entrostung (weiteres Ausstemmen des Betons und Sandstrahlen) und für die Herstellung des volldeckenden Schutzanstrichs mit den bekannten Rostschutzfarben sowie die Probleme, die durch die Verwendung alkaliempfindlicher Deckanstriche (Beton pH = ca. 13) entstehen können, zeigen die Notwendigkeit zu einer Vereinfachung und Verbesserung der Verfahren zur Sanierung von Bauwerken aus Stahlbeton.

Nach dem erfindungsgemäßen Verfahren zur Instandsetzung der oberflächennahen Schichten von mit Bau stahl armierten Bauwerken legt man die korrodierten Stahlteile frei, indem man den losen Rost und den carbonatisierten Beton in der Umgebung der Bewehrung entfernt, behandelt den Baustahl und seine benachbarte Betonmasse mit einer wässrigen Lösung eines modifizierten Alkalisilikats mit einem $Me_2O : SiO_2$ Gewichtsverhältnis von 1:2 bis 1:3 und deckt ihn mit Zementmörtel, ab, der 2 bis 6 Gewichtsprozent, bezogen auf den Zementanteil einer feinteiligen amorphen Kieselsäure mit mindestens 90 Gewichtsprozent $SiO_2$ oder feinteilige gefällte aktive Silikate des Magnesiums, Calciums, Bariums oder Aluminiums mit einer BET-Oberfläche von 50 bis 200 m²/g und einem d $_{50\%}$-Wert, gemäß der Kornanalyse nach Cilas, unter 20 μm enthält.

In der obigen allgemeinen Formel $Me_2O$ für den Alkalioxidanteil des modifizierten Alkalisilikats bedeutet Me Lithium, Natrium oder Kalium, wobei letzteres im Gemisch mit Natrium bevorzugt wird. Ein Vol.-Teil des Alkalisilikats wird in der Regel mit 0,5 bis 2 Volumteilen Wasser verdünnt. Das entspricht $SiO_2$-Konzentrationen in der Lösung von etwa 7 bis 20 Gewichtsprozent. Die vorstehend und im folgenden verwendete BET-Methode zur Oberflächenbestimmung durch Berechnung der Monoschichtkapazität ist von Brunauer, Emmet und Teller ist u.a. in Ullmanns Enzyklopädie der technischen Chemie, Band II/1, Seite 758/59 beschrieben.

Zur Kornanalyse wird ein Gerät der Firma Cilas verwendet, das nach der Laserstrahlmethode arbeitet. Diese Methode wird von J. Swithenbank et al. in "Experimental diagnostics in gas phase combustion systems, Progress in Astronautics and Aeronautics, Vol. 53, (1977)" beschrieben.

Von den dem Mörtel zugesetzten feinteiligen Silikaten werden Bariumsilikat der Zusammensetzung 40 % BaO, 52 % $SiO_2$ und 8 % Glühverlust oder ein Natriumaluminiumsilikat der Zusammensetzung 73 % $SiO_2$, 7 % $Al_2O_3$ 7 % $Na_2O$ und 12 % Glühverlust bevorzugt.

In der Regel enthalten die technisch hergestellten Kieselsäuren und Silikate Restmengen von $Na_2O$ und $SO_4^{2-}$ aus den Rohstoffen sowie wenig $Fe_2O_3$ und Spuren anderer Oxide. Die Summe dieser Fremdstoffanteile beträgt 1 - 1,5 %.

Es empfiehlt sich, die reparierte Oberfläche nach dem Abbinden mit der modifizierten Alkalisilikatlösung satt zu tränken.

Es ist überraschend, daß die Kombination der erfindungsgemäßen Maßnahmen zusammen mit den erfindungsgemäß eingesetzten Produkten ausreichen, Stahlbeton auf einfache Weise dauerhaft zu sanieren. Der relativ geringe Anteil von 2 - 6 Gew.% einer feinteiligen amorphen Kieselsäure oder der genannten Silikate, insbesondere des Natriumaluminiumsilikats verbessert die Verarbeitungseigenschaften der Zement/Sand/Wassermischung bei praktisch unverändertem Erstarrungs- und Abbindeverhalten. Es findet keine Phasentrennung durch das Aufschwimmen von Wasser mit Zementfeinanteilen statt, d.h., das sog. Ausbluten des Mörtels oder des Betons wird vollständig unterbunden. Auch ist diese Mörtelmischung beim gleichen Wasser- Zement-Faktor geschmeidiger. Der Mörtel läßt sich daher besser in enge Fugen einarbeiten und die Oberfläche glatter verstreichen. Der erfindungsgemäß eingesetzte Reparaturmörtel ist auch ohne Nachbehandlung wasserdicht, behält aber seine Durchlässigkeit für Wasserdampf.

Anhand der Beispiele sei das Verfahren näher erläutert.

Beispiel 1

An der senkrechten Fläche eines Bauwerks aus Stahlbeton war die Betonschicht durch Rost abgesprengt worden, so daß die erste Lage der Armierung freilag.

Die lockeren Betonteile wurden ausgestemmt und der lose Rost an der Armierung abgekratzt. Die Betonfläche im Reparaturbereich sowie die Eisenteile wurden mit der modifizierten Alkalisilikatlösung volldeckend und satt gestrichen. Die Übergänge zum unbeschädigten alten Beton erhielten ebenfalls diesen Anstrich. Die verwendete Alkalisilikatlösung hatte die folgende Zusammensetzung:

$SiO_2$ 19,14 %

$Na_2O$ 7,54

$CrO_4$ 0,31

$CO_2$ 0,

Ethanol 0,92 %

Der Rest zu 100 % besteht aus Wasser.

Gewichtsverhältnis $Na_2O:SiO_2$ folglich 1 : 2,54.

Dichte 1,251

Viskosität 10,1 cP

Oberflächenspannung 54 dyn/cm

pH-Wert 11,4

Aus 1 Gewichtsteil PZ 350 F und 3,5 Gewichtsteilen Sand von der Körnung 0 - 2 mm sowie 3 Gewichtsprozent, bezogen auf den Zement, einer feinteiligen amorphen Kieselsäure mit einer BET-Oberfläche von (140 $m_2$/g und 93,8 % $SiO_2$, bezogen auf den Anlieferungszustand, wurde eine Trockenmischung hergestellt. Danach wurden 0,5 Gewichtsteile Wasser zugegeben und mit dem Trockenmörtel zu einem geschmeidigen Reparaturmörtel angemacht.

Die nach der Alkalisilikatbeschichtung leicht angetrocknete Reparaturstelle wurde mit dem Reparaturmörtel in der Weise verputzt, daß die reparierte Fläche mit der alten Betonoberfläche in einer Ebene lag. Nachdem der Zementmörtel abgebunden hatte wurde die Reparaturstelle mit der modifizierten Alkalisilikatlösung satt getränkt.

Beispiel 2

Es wurde die Wasseraufnahme nach DIN 52 103 I A in Vol.-% von den folgenden Probekörpern untersucht:

a) Körper aus der Mörtelmischung des Beispiels 1 hergestellt, aber ohne die Zugabe von 3 % feinteiliger amorpher Kieselsäure.

b) Körper aus der Mörtelmischung des Beispiels, d.h. mit 3 % feinteiliger amorpher Kieselsäure hergestellt.

c) Erfindungsgemäß wurde der Körper von b) mit der modifizierten Alkalisilikatlösung satt getränkt.

Die Tabelle enthält die Meßwerte, Mittelwert aus sechs Probekörpern, der 28 Tage gelagerten Proben. Die Körper nach c) erhielten ihren Alkalisilikatanstrich nach 25 Tagen Lagerung und trockneten drei weitere Tage.

| Prüfkörper | Wasseraufnahme nach DIN 52103 I A in Vol.% |
|---|---|
| a) ohne Kieselsäure | 6,7 |
| b) mit 3 % Kieselsäure | 0,11 |
| c) mit 3 % Kieselsäure und vorheriger Tränkung mit der modifizierten Alkalisilikatlösung | 0,0 |

## Patentansprüche

1. Verfahren zur Instandsetzung der oberflächennahen Schichten von mit Baustahl armierten Bauwerken, dadurch gekennzeichnet, daß man den korrodierten Baustahl freilegt, mit der Lösung eines modifizierten Alkalisilikats mit einem $Me_2O:SiO_2$-Verhältnis von 1:2 bis 1:3 behandelt und mit einem Mörtel abdeckt, der 2 bis 6 Gew.%, bezogen auf den Zementanteil, einer feinteiligen amorphen Kieselsäure mit mindestens 90 Gew.% $SiO_2$ oder feinteilige gefällte aktive Silikate des Magnesiums, Calciums, Bariums oder Aluminiums mit einer BET-Oberfläche von 50 bis 200 m²/g und einem $d_{50\%}$ Wert unter 20 μm enthält.

2. Verfahren nach Anspruch 1, dadurch gekennzeichnet, daß die feinteiligen gefällten Silikate einen $SiO_2$-Gehalt von 56 - 85 %, bezogen auf die wasserfreie Substanz, aufweisen.

3. Verfahren nach den Ansprüchen 1 und 2, dadurch gekennzeichnet, daß die gefällten feinteiligen aktiven Silikate des Aluminiums 5 - 15 Gew.% $Al_2O_3$ und 1 - 10 Gew.% $Na_2O$, bezogen auf die wasserfreien Substanzen, enthalten.

4. Verfahren nach den Ansprüchen 1 bis 3, dadurch gekennzeichnet, daß die gesamte reparierte Oberfläche, nachdem der Abbindevorgang des Mörtels praktisch abgeschlossen ist, mit der Alkalisilikatlösung satt getränkt wird.

## Claims

1. Process for repairing the near-surface layers of constructions reinforced with structural steel, characterised in that the corroded structural steel is laid bare, treated with a solution of a modified alkali silicate having an $Me_2O:SiO_2$ ratio of 1:2 to 1:3 and is covered with a mortar which contains 2 to 6% by weight $SiO_2$ or finely divided precipitated active silicates of magnesium, calcium, barium or aluminium having a BET surface area of 50 to 200 m²/g and a $d_{50\%}$ value of lessthan 20 μm.

2. Process according to Claim 1, characterised in that the finely divided precipitated silicates have an $SiO_2$content of 56–58%, relative to the anhydrous substance.

3. Process according to Claims 1 and 2, characterised in that the precipitated finely divided active silicates of aluminium contain 5–15% by weight $Al_2O_3$ and 1–10% by weight $Na_2O$, relative to the anhydrous substance.

4. Process acording to Claims 1 to 3, characterised in that, after the mortar setting process has practically finished, the entire repaired surface is impregnated to saturation point with the alkali silicate solution.

## Revendications

1. Procédé de remise en état des couches proches de la surface d'ouvrages à armatures d'acier de construction, caractérisé en ce qu'on dégage l'acier de construction corrodé, on le traite avec la solution d'un silicate alcalin modifié de rapport $Me_2O:SiO_2$ d'une valeur de 1:2 à 1:3 et on le recouvre d'un mortier qui contient 2 à 6% en poids, par rapport à la fraction de ciment, d'une silice amorphe en fines particules contenant au moins 90% en poids de $SiO_2$ ou de fines particules précipitées de silicates actifs de magnésium, calcium, baryum ou aluminium ayant une surface BET de 50 à 200 m²/g et une valeur $d_{50\%}$ inférieure à 20 μm.

2. Procédé suivant la revendication 1, caractérisé en ce que les silicates précipités en fines particules ont une teneur en $SiO_2$de 56 à 58%, par rapport à la substance anhydre.

3. Procédé suivant les revendications 1 et 2, caractérisé en ce que les silicates d'aluminim actifs précipités en fines particules contiennent 5 à 15% en poids de $Al_2O_3$ et 1 à 10% en poids de $Na_2O$, par rapport aux substances anhydres.

4. Procédé suivant les revendications 1 à 3, caractérisé en ce que la surface entière remise en état, lorsque le processus de prise du mortier est pratiquement achevé, est imprégnée jusqu'à saturation de la solution de silicate alcalin.